# EUROPEAN PATENT SPECIFICATION

(11) **EP 2 719 496 B1**
(45) Date of publication and mention of the grant of the patent: **26.09.2018**
(21) Application number: 12796881.6
(22) Date of filing: 04.06.2012
(51) Int. Cl.: B23K 35/363, B23K 35/365, B23K 35/362, B23K 35/36, B23K 35/02

(54) **FLUX**
FLUSSMITTEL
FLUX

(30) Priority: 06.06.2011 JP 2011126282
(43) Date of publication of application: 16.04.2014
(73) Proprietor: Senju Metal Industry Co., Ltd, Tokyo 120-8555 (JP)
(72) Inventor: MINAKUCHI Daisuke, Tokyo 120-8555 (JP); SUGIURA Tatsuya, Tokyo 120-8555 (JP)
(74) Representative: D Young & Co LLP
(86) International application number: PCT/JP2012/064374
(87) International publication number: WO 2012/169459

(56) References cited:
- EP-A1- 1 627 935
- EP-A1- 2 100 690
- WO-A1-2008/072654
- DE-A1- 4 131 950
- JP-A- 7 088 687
- JP-A- 2003 225 795
- SU-A1- 449 792
- US-A1- 2003 178 101

## Description

### TECHNICAL FIELD

The present invention relates to a flux to be mixed with solder powders and it particularly relates to a flux having an effect of preventing a migration from occurring after soldering.

### BACKGROUND

Electrodes have been formed in accordance with terminals of leads or the like of electronic components on a substrate such as a printed circuit board on which the electronic components are mounted. Fixation and electric connection of the electronic components and the substrate has been made largely by soldering. In such a substrate, an ion (or electrochemical) migration may occur on a soldered portion of the terminals of the electronic components and the electrodes of the substrate due to any causes such as water droplets adhered to the electrodes through which direct voltage is applied.

The ion migration (hereinafter, referred to as "migration") is such a phenomenon that metal ions dissolved from an anode transfer electrons in a cathode, between the electrodes through which direct voltage is applied, and reduced metal grows from the cathode and both electrodes is shortcircuited by the reduced metal extending to the anode. When such a migration occurs, the short circuit occurs between both electrodes so that any function as the substrate is lost.

Apropos, in general, the flux used for the soldering has such an efficacy that it chemically removes metallic oxides exiting on a surface of a solder and a surface of the metal to be soldered at a temperature in which the solder melts and can move metallic element through a boundary of them. By using the flux, it is possible to form an intermetallic compound between the surface of the solder and the surface of the metal to be soldered so that any strong bonding can be obtained.

Solder paste is a composite material obtained by mixing solder powders and a flux. The solder paste is applied to the soldering portions such as the electrodes, terminals and the like of the substrate such as the printed circuit board or the like by means of a printing method or a discharging method. Components are mounted on the soldering portions to which the solder paste is applied and the soldering is performed so that the substrate is heated in a heating furnace called a reflow furnace to melt the solder.

The flux contains any ingredients that cannot be dissolved or evaporated by heating on the soldering and they remains around the soldered portions as flux residue after the soldering. As one of the causes by which the above-mentioned migration occurs, the adhering of water droplets between the electrodes is taken. Since rosin (pine resin) contained in the flux as a main ingredient has any water-repellent priority, when the flux residue containing the rosin as its main ingredient is formed on the soldered portion, any migration does not occur directly because of the water-repellent effect of the rosin even if any water droplets are adhered onto the flux residue.

However, when cracks occur in the flux residue, moisture permeates from the cracked portions of the flux residue into the flux residue so that this moisture causes the migration to occur.

Accordingly, until now, a measure against the migration generated by the water droplets or the like has been taken by configuring a structure of the substrate as the one preventing any water droplets from being adhered to the surface to be soldered. Or, it has been also taken by performing a moisture-proofing coating on the surface to be soldered.

On the other hand, a technology for suppressing an occurrence of migration by the flux residue and adding fatty acid ester to the flux has been proposed (For example, see Patent Document 1).

### DOCUMENTS FOR PRIOR ART

### PATENT DOCUMENTS

Patent Document 1: Japanese Patent Application Publication No. Hei11-077376. Other previously proposed arrangements are disclosed in EP 2100690, SU 449792, and US 2003/178101.

### SUMMARY OF THE INVENTION

### PROBLEMS TO BE SOLVED BY THE INVENTION

When adding fatty acid ester of glycerin to the flux, it is possible to make any ductile to the flux residue. It is possible to suppress an occurrence of cracks in the flux residue when the soldered portion is exposed to any inferior circumstances after the soldering.

It, however, is impossible to suppress an occurrence of migration based on any cause other than the moisture permeation by cracks in the residue only if any ductile is made to the flux residue. Namely, as other causes for allowing the migration to occur, a decrease in insulation resistance of the flux residue by moisture absorption to the residue and/or an adhesion of absorbed moisture to the electrodes, under high temperature/high humidity circumstances, are taken.

Even when the moisture permeation by cracks in the flux residue can be prevented by making any ductile to the flux residue, it is impossible to suppress the occurrence of migration based on the decrease in insulation resistance of the flux residue by the moisture absorption and/or the adhesion of absorbed moisture to the electrodes by the moisture absorption, under the high temperature/high humidity circumstances. Accordingly, even when forming the flux residue on the soldered portion with the flux residue covering the soldered portion, it is impossible to suppress the occurrence of migration surely.

Further, as the measure for suppressing the occurrence of migration, configuring a structure of the substrate as the one preventing any water droplets from being adhered and performing the moisture-proofing coating cause any costs to increase in an assembly of the substrate.

The present invention solves the above discussed problems and has an object to provide a flux that does not only allow the flux residue to cover the soldered portion but also suppresses the occurrence of migration surely, in the soldered portion on which the flux residue is formed.

### MEANS FOR SOLVING THE PROBLEMS

Inventors have focused on adsorptive capacity of phosphonate ester to a metal and have found out such a fact that the phosphonate ester is adsorbed to a surface of the metal such as solder during the soldering, by adding the phosphonate ester to the flux that forms the solder paste by mixing it with the solder powders, to form a hydrophobic film.

The invention relates to a flux as defined in the appended claim.

### EFFECTS OF THE INVENTION

In the flux according to this invention, by adding the phosphonate ester having the adsorptive capacity to a metal, when the solder paste is produced by mixing the flux of this invention with the solder powders and the soldering is performed by using this solder paste to form the flux residue, the phosphonate ester is adsorbed to a surface of the metal in the soldered portion on which the flux residue is formed so as to form a hydrophobic film.

Thus, the hydrophobic film of phosphonate ester adsorbed to the soldered portion suppresses the adhesion of water droplets or the like to the soldered portion on which the flux residue is formed. Even when cracks occur in the flux residue when the soldered portion is exposed to any inferior circumstances, it is possible to suppress the adsorption of the water droplets or the like to the soldered portion and to suppress the occurrence of migration because of the adhesion of the water droplets or the like.

Further, even when the insulation resistance of the flux residue is decreased by moisture absorption to the flux residue under high temperature/high humidity circumstances or when absorbed moisture is adhered to the electrodes because of the moisture absorption to the flux residue, the hydrophobic film of phosphonate ester adsorbed to the soldered portion can suppress the occurrence of migration. Accordingly, a substrate on which the soldering is performed using the solder paste mixing the flux according to the invention and an electronic device mounting this substrate thereon can realize high reliability.

Additionally, since the phosphonate ester added to the flux obtains an effect of preventing the migration from occurring, the structure of preventing any water droplets from being adhered, which has been previously required to the substrate, and the moisture-proofing coating are made unnecessary, which can reduce the costs that is necessary in the assembly thereof.

### EMBODIMENT FOR CARRYING OUT THE INVENTION

The flux according to this embodiment is mixed with solder powders to form solder paste. The flux according to this embodiment contains phosphonate ester which is adsorbed to a surface of a metal such as solder during the soldering. The phosphonate ester is diethyl benzylphosphonate, diethyl allylphosphonate, diethyl (p-methylbenzyl) phosphonate or (2-ethylhexyl)-2-ethylhexyl phosphonate.

The flux contains any ingredients that cannot be dissolved or evaporated by heating on the soldering and the flux residue is formed on the soldered portion to cover it after the soldering. Further, in the solder paste containing the flux according to this embodiment in which a predetermined amount of the phosphonate ester is added, the phosphonate ester does not evaporate at a heating temperature on the soldering and adsorbs a surface of the metal such as the solder and the electrodes to be bonded by the solder to form the hydrophobic film on a surface of the soldered portion.

This film obstructs a contact of water droplets with the metal to suppress the occurrence of migration. When the soldered portion is exposed to any inferior circumstances such as large temperature change circumstances, repeated temperature change circumstances, made impact circumstances and the like while there is the flux residue on the soldered portion, any moisture is prevented from being directly contacted with any metal portion of the soldered portion because the hydrophobic film covers the surface of the soldered portion even if any cracks occur in the flux residue to penetrate the moisture thereto.

Even when the insulation resistance of the flux residue is decreased by moisture absorption to the flux residue under high temperature/high humidity circumstances or when absorbed moisture is adhered to the electrodes because of the moisture absorption to the flux residue, the moisture is prevented from being directly contacted with the metal portion of the soldered portion because the hydrophobic film covers the surface of the soldered portion. This suppresses the occurrence of migration.

Here, due to an addition amount of the phosphonate ester, the flux residue property varies. When the addition amount of the phosphonate ester is increased, the flux residue is made liquefaction. Accordingly, taking into consideration the flux residue property after the soldering, the addition amount of the phosphonate ester is not less than 10 mass % through less than 30 mass %.

### [Executed Examples]

The executed examples and the comparison examples were compared to each other concerning the effects of preventing the migration from occurring due to the addition of the phosphonate ester or not when the fluxes which had compositions shown in following tables were prepared and the solder pastes were prepared using the fluxes of the executed examples and the comparison examples. Further, they were compared to each other on a relationship between the addition amount of the phosphonate ester and the flux residue property.

### (1) Compositions of Fluxes

The fluxes of the executed examples and the comparison examples having compositions shown in the flowing Table 1 were prepared and the solder pastes were prepared so that the solder powders (composition; Sn-3Ag-0.5Cu; particle size: 25 through 36 µ m) became 89 % by mass %. It is to be noted that composition rate in the Table 1 is represented by mass %.

**[Table 1]**

| | EXECUTED EXEMPLE 1 | EXECUTED EXEMPLE 2 | EXECUTED EXEMPLE 3 | EXECUTED EXEMPLE 4 | EXECUTED EXEMPLE 5 | COMPARISON EXEMPLE 1 | COMPARISON EXEMPLE 2 |
|---|---|---|---|---|---|---|---|
| Rosin | 50% | 50% | 50% | 50% | 50% | 50% | 50% |
| Diethyl benzylphosphonate | 10% | | | | 1% | 30% | |
| Diethyl allylphosphonate | | 10% | | | | | |
| Diethyl (p-methylbenzyl)phosphonate | | | 10% | | | | |
| (2-ethythexyl)-2-ethylhexyl phosphonate | | | | 10% | | | |
| Diethylene glycol monohexyl ether | 34% | 34% | 34% | 34% | 43% | 14% | 44% |
| Hardened castor oil | 5% | 5% | 5% | 5% | 5% | 5% | 5% |
| Diethylamine hydrobromide | 1% | 1% | 1% | 1% | 1% | 1% | 1% |

In the table 1, diethyl benzylphosphonate, diethyl allylphosphonate, diethyl (p-methylbenzyl)phosphonate or (2-ethylhexyl)-2-ethylhexyl phosphonate are used in the examples. They were selectively added in each of the executed examples. In addition, diethyl benzylphosphonate was added to the comparison example 1 as an example of the phosphonate ester in order to make a comparison on the relationship between the addition amount of the phosphonate ester and the flux residue property. No diethyl benzylphosphonate was added to the comparison example 2.

Executed example 5 is a reference example. Rosin as an ingredient constituting each of the fluxes of the executed examples and the comparison examples mainly has a function of removing an oxide from the surface of the metal. Diethylene glycol monohexyl ether has a function of dissolving rosin and other additive. As remaining ingredients of each of the fluxes, hardened castor oil was added as viscosity modifier and diethylamine hydrobromide was added as an activator.

### (2) Examined Method

The solder pastes of the executed examples and the comparison examples shown in the Table 1 were printed to the electrodes formed at a pitch of 0.5 mm on the substrates, components each having leads with the same pitch as that of the electrodes were mounted on each of the substrates and they were soldered in a reflow furnace. In order to perform an accelerated degradation test, ion exchanged water then dripped to the soldered electrodes and voltage of 8V was applied through the leads. Migration occurrence time was measured while observing it with stereoscopic microscope.

### (3) Results

The following Table 2 shows the migration occurrence time.

**[Table 2]**

| | EXECUTED EXEMPLE 1 | EXECUTED EXEMPLE 2 | EXECUTED EXEMPLE 3 | EXECUTED EXEMPLE 4 | EXECUTED EXEMPLE 5 | COMPARISON EXEMPLE 1 | COMPARISON EXEMPLE 1 |
|---|---|---|---|---|---|---|---|
| MIGRATION OCCURRENCE TIME [sec] | 480_{or more} | 480_{or more} | 480_{or more} | 480_{or more} | 360 | 480_{or more} | 160 |

As shown in the executed example 5 of the above-mentioned Table 2, when the phosphonate ester of 1 % by mass % was added, the migration occurrence time thereof was extended as compared with a case of the comparison example 2 where no phosphonate ester was added. It is understood that the addition of phosphonate ester allows an effect of preventing the migration from occurring to be exhibited. As shown in the executed examples 1 through 4, when the addition amount of the phosphonate ester was about 10 %, the migration occurrence time thereof was sufficiently extended. It is understood that the effect of preventing the migration from occurring is further improved.

Accordingly, it is understood that the addition amount of the phosphonate ester can be not less than 10 mass %.

On the other hand, when the addition amount of the phosphonate ester is 30 % by mass % shown in the comparison example 1, the hydrophobic film is formed on the soldered portion on which the flux residue is formed but the flux residue is made liquefaction. Even when the flux residue is made liquefaction, the effect of preventing the migration from occurring is still maintained. However, when any dusts are adhered to the soldered portion on which the liquidized flux residue is formed after the soldering, a decrease in insulation resistance between the electrodes occurs so that a risk such that an electric reliability of a circuit is lost is generated.

Thus, it is understood that when taking into consideration the effect of preventing the migration from occurring, the addition amount of the phosphonate ester may exceed about 30 % by mass % but when taking into consideration the flux residue property, the addition amount of the phosphonate ester is less than 30 %.

In view of the above-mentioned results, it is understood that the addition of the phosphonate ester to the flux allows the effect of preventing the migration from occurring to be exerted and in order to form the hydrophobic film of phosphonate ester on the soldered portion on which the flux residue is formed, the phosphonate ester of not less than 10 mass % through less than 30 mass % is added. It is to be noted that when adding the phosphonate ester to the flux, it is found that wettability can be improved even if addition of a halogenide as an activator is reduced.

### INDUSTRIAL APPLICABILITY

The flux according to the invention is applicable to an electronic device or the like mounted on a vehicle and an electronic device used under a circumstance where it may be influenced by water or dust.

## Claims

1. A flux suitable for forming solder paste by mixing the flux with solder powder, **characterized in that** the flux contains phosphonate ester of not less than 10 mass % through less than 30 mass % such that a hydrophobic film is formed during soldering, the phosphonate ester being adsorbed to a metal surface of a soldered portion and the hydrophobic film remaining after the soldering, and wherein the phosphonate ester is diethyl benzylphosphonate, diethyl allylphosphonate, diethyl (p-methylbenzyl) phosphonate, or (2-ethylhexyl)-2-ethylhexyl phosphonate.

## Patentansprüche

1. Flussmittel, das zur Bildung von Lötpaste durch Mischen des Flussmittels mit Lötpulver geeignet ist, **dadurch gekennzeichnet, dass** das Flussmittel Phosphonatester in einer Menge von nicht weniger als 10 Massen-% bis weniger als 30 Massen-% enthält, so dass beim Löten ein hydrophober Film gebildet wird, wobei der Phosphonatester an einer Metalloberfläche eines gelöteten Teils absorbiert wird und der hydrophobe Film nach dem Löten zurückbleibt, und wobei es sich bei dem Phosphonatester um Diethylbenzylphosphonat, Diethylallylphosphonat, Diethyl(p-methylbenzyl)-phosphonat oder (2-Ethylhexyl)-2-ethylhexyl-phosphonat handelt.

## Revendications

1. Flux approprié pour la formation de pâte à braser par mélange du flux avec de la poudre à braser, **caractérisé en ce que** le flux contient un ester de type phosphonate à hauteur de pas moins de 10 % en masse à moins de 30 % en masse de façon telle qu'un film hydrophobe est formé pendant le brasage, l'ester de type phosphonate étant adsorbé sur une surface métallique d'une partie brasée et le film hydrophobe restant après le brasage, et dans lequel l'ester de type phosphonate est le benzylphosphonate de diéthyle, l'allylphosphonate de diéthyle, le (p-méthylbenzyl)phosphonate de diéthyle ou le (2-éthylhexyl)phosphonate de 2-éthylhexyle.
